Europäisches Patentamt

European Patent Office

Office européen des brevets

(19)

(11) Numéro de publication: **0 070 340**
**B1**

(12) **FASCICULE DE BREVET EUROPEEN**

(45) Date de publication du fascicule du brevet: **23.10.85**

(51) Int. Cl.⁴: **A 01 D 43/06**

(21) Numéro de dépôt: **81401134.2**

(22) Date de dépôt: **16.07.81**

(54) **Dispositif de commande de la goulotte pour récolteuse-hacheuse-chargeuse.**

(43) Date de publication de la demande:
**26.01.83 Bulletin 83/04**

(45) Mention de la délivrance du brevet:
**23.10.85 Bulletin 85/43**

(84) Etats contractants désignés:
**AT CH DE FR GB LI NL**

(56) Documents cités:
**FR-A-2 213 729**
**FR-A-2 411 551**
**GB-A-2 073 914**
**US-A-2 864 517**
**US-A-3 289 864**
**US-A-3 817 410**
**US-A-4 042 132**
**US-A-4 221 508**

(73) Titulaire: **DEERE & COMPANY**
**1 John Deere Road**
**Moline Illinois 61265 (US)**

(72) Inventeur: **Magin, Ludwig**
**Am Deutschhof 2-4**
**D-6707 Schifferstadt (DE)**

(74) Mandataire: **Pruvost, Marc Henri et al**
**Cabinet ORES 6, Avenue de Messine**
**F-75008 Paris (FR)**

Courier Press, Leamington Spa, England.

## Description

La présente invention se rapporte d'une façon générale aux récolteuses-hacheuses-chargeuses.

Ces machines sont soit attelées à un tracteur, soit de type automoteur, et elles comportent de façon connue des organes pour couper ou ramasser les produits de récolte, notamment le fourrage, un système de couteaux servant à hacher ces produits, et un système de ventilateur qui projette les produits de récolte hachés, au moyen d'une goulotte, dans une remorque ou un autre réceptacle combiné à la récolteuse-hacheuse ou accompagnant celle-ci. Les machines de ce type sont également dénomées faucheuses-hacheuses-chargeuses. Si, selon une autre réalisation, elles assurent simplement le ramassage sur le sol de produits coupés au préalable, elles sont souvent dénommées ramasseuses-hacheuses ou ramasseuses-hacheuses-chargeuses.

Pour des raisons de simplicité, on utilisera dans l'ensemble de cette description l'expression récolteuse-hacheuse-chargeuse pour désigner l'ensemble des machines des type fisés précédemment.

La goulotte prévue sur la machine est généralement orientable pour pouvoir projeter les produits de récolte hachés dans la remorque ou le réceptacle fonctionnellement associé à la machine. Il peut s'agir alors d'une remorque attelée à la machine elle-même, ou bien d'une remorque attelée à un véhicule tracteur qui accompagne la récolteuse-hacheuse-chargeuse sur le terrain pendant le travail.

Un problème qui se pose d'une façon générale au conducteur du tracteur auquel la récolteuse-hacheuse-chargeuse est attelée, ou bien au conducteur d'une machine automotrice, ou encore au conducteur du tracteur auquel la remorque de chargement des produits est attelée, est en conséquence la commande des moyens assurant l'orientation de la goulotte de la machine, projeter avec certitude les produits hachés dans la remorque ou l'autre réceptacle fonctionnellement associé, afin d'éviter bien entendu des pertes de produits. Cette commande d'orientation exige donc, de la part du conducteur une attention supplémentaire pendant le travail. Or il est avantageux bien entendu de permettre au conducteur du tracteur ou de la machine de concentrer toute son attention sur la conduite de son véhicule, pour éviter les fausses manoeuvres et réduire en outre sa fatigue.

Un but de l'invention est en conséquence de permettre la réalisation d'un agencement assurant une orientation automatique de la goulotte d'une récolteuse-hacheuse-chargeuse de façon telle que les produits hachés projetés par le ventilateur parviennent toujours avec certitude dans la remorque ou le réceptacle fonctionnellement associé à la machine, sans intervention du conducteur du tracteur ou de la machine, ce qui favorise l'obtention d'une automatisation toujours plus poussée des machines agricoles, telle qu'elle est recherchée à l'heure actuelle.

Lorsque le réceptacle destiné à recevoir les produits est constitué par une remorque attelée directement au tracteur auquel la récolteuse-hacheuse-chargeuse est elle-même reliée, ou bien directement à une récolteuse-hacheuse-chargeuse automotrice, le problème peut être résolu par des moyens mécaniques assurant l'orientation de la goulotte ou bien dirigeant celle-ci en fonction des positions relatives entre le tracteur ou la machine et la remorque (Demande de brevet français FR—A—2 411 551 et Brevets U.S. 3 289 864 et 3 817 410). Dans un tel cas, le problème posé peut également être résolu par des moyens électro-mécaniques, à partir de la détection de la position angulaire entre le tracteur ou la machine et la remorque (Brevet U.S. 4 042 132).

Mais de tels moyens exigeant une liaison mécanique sont inutilisables lorsque la remorque est indépendante de la récolteuse-hacheuse-chargeuse, qu'elle soit attelée à un tracteur ou automotrice. La Demanderesse a déjà proposé de résoudre le problème alors posé, comme décrit dans la demande de brevet français FR—A—2 213 729, au moyen d'une boucle de conducteur entourant la remorque et produisant un champ magnétique lors de son excitation. Ce champ est alors détecté par une bobine montée sur la machine ou la goulotte, et la tension de sortie de cette bobine est utilisée pour commander l'orientation de la goulotte au moyen d'un dispositif électro-hydraulique bidirectionnel.

Bien qu'elle ne soit pas limitée à cette application, l'invention trouve une utilité particulière lorsque la récolteuse-hacheuse-chargeuse et la remorque sont ainsi spatialement indépendantes.

Le but de l'invention est d'apporter des perfectionnements à l'agencement connu en simplifiant les moyens pour sa mise en oeuvre.

L'invention est matérialisée en conséquence dans un dispositif de commande de la goulotte pour récolteuse-hacheuse-chargeuse automotrice ou attelée à un tracteur, se déplaçant dans un champ en étant accompagnée d'une remorque ou autre véhicule indépendant formant réceptacle pour les produits récoltés et hachés, afin d'orienter la goulotte de manière à projeter ces produits dans ce réceptacle, et faisant appel à un émetteur et un récepteur de type électrique ainsi qu'à des moyens combinés à l'ensemble émetteur-récepteur pour interpréter les signaux reçus et pour actionner, en fonction du résultat de cette interprétation, les organes d'orientation de la goulotte, caractérisé en ce qu'il est prévu un ensemble émetteur-récepteur de type radio-électrique, monté sur la récolteuse-hacheuse-chargeuse, et un réflecteur ou analogue monté sur la remorque ou autre réceptacle ou sur le véhicule associé.

Suivant une dispositif avantageuse, l'ensemble émetteur-récepteur est combiné à la goulotte et est orientable avec celle-ci.

Suivant un mode de réalisation judicieux, il est prévu un élément de commande recevant les signaux émis et les signaux reçus et relié à un relais ou organe équivalent associé à une électro-valve montée dans un circuit hydraulique entre une source de liquide et un moteur hydraulique ou analogue de commande de l'orientation de la goulotte.

Ces organes peuvent être montés sur la machine en parallèle avec un système d'orientation hydraulique à commande manuelle classique, des moyens étant prévus pour assurer la mise en service sélective du système de commande manuelle ou de la commande d'orientation automatique.

On obtient alors une orientation automatique de la goulotte, sans intervention des conducteurs des deux véhicules, qui peuvent ainsi concentrer leur attention sur la conduite de leur véhicule.

L'invention concerne également les attelages ou ensembles comprenant un tracteur, une récolteuse-hacheuse-chargeuse et une remorque ou analogue ou une récolteuse-hacheuse-chargeuse automotrice et une remorque ou analogue dans lesquels l'orientation de la goulotte est, au cours du travail, assurée au moyen d'un dispositif du type mentionné précédemment.

La description qui va suivre, faite en regard des dessins annexés, donnés à titre non limitatif, permettra de mieux comprendre l'invention.

La Fig. 1 est une vue schématique d'un mode de réalisation de l'invention.

La Fig. 2 montre un système électrohydraulique utilisable dans le cas de ce mode de réalisation.

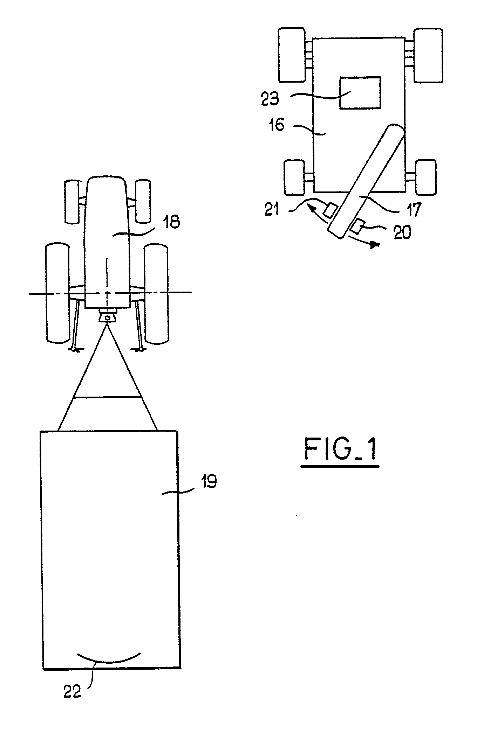

Sur la Fig. 1, on a indiqué en 16 une récolteuse-hacheuse-chargeuse automotrice qui peut être de n'importe quel type connu et sur laquelle une goulotte 17 est montée de façon orientable. L'orientation de cette goulotte peut être assurée par un moteur hydraulique connu (non représenté) alimenté à partir du système hydraulique de la machine et commandé par exemple par une valve électromagnétique.

Sur cette Fig. 1, on a indiqué en 18 un tracteur agricole auquel est attelée une remorque 19 destinée à recevoir les produits de récolte hachés projetés par la goulotte 17. Suivant l'invention, il est prévu sur la goulotte de la récolteuse-hacheuse-chargeuse un émetteur de signaux radioélectriques indiqué en 20, ainsi qu'un récepteur indiqué en 21. Un réflecteur 22 est porté par la remorque 19.

L'émetteur 20 émet de façon continue ou intermittente des signaux radioélectriques qui sont réfléchis par le réflecteur 22 et qui sont captés par le récepteur 21 quand la goulotte 17 est orientée correctement vers la remorque 19.

Le récepteur 21 et l'émetteur 20 sont connectés à un élément de commande 23 également monté sur la récolteuse-hacheuse-chargeuse 16.

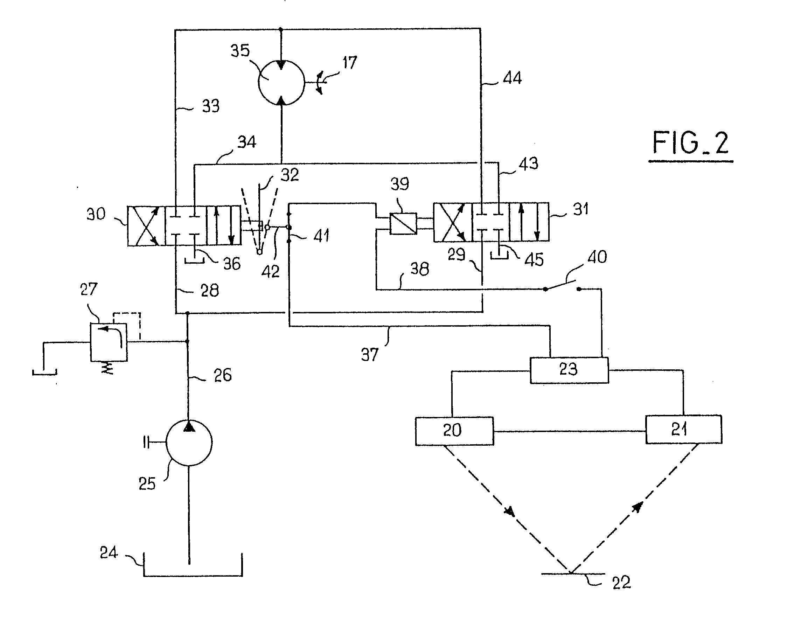

La manière dont les signaux résultants sont exploités pour commander l'orientation de la goulotte 17 sera décrite dans le case du système représenté sur la Fig. 2.

On a indiqué sur cette Fig. 2 un système hydraulique qui permet de façon sélective une commande manuelle et une commande automatique de l'orientation de la goulotte 17.

Ce système comprend un réservoir 24 auquel du liquide, notamment de l'huile, est prélevé par une pompe 25 dont le conduit de refoulement 26 est conjugué à une soupape de détente 27 limitant la pression dans le système. Ce conduit 26 est relié par des conduits 28 et 29 à deux valves 30 et 31. La valve 30 est du type à trois positions et elle est fermée en position médiane ou neutre. Elle est commandée manuellement au moyen d'un levier 32. Cette valve 30 est reliée par des conduits 33, 34 au deux côtés d'un moteur hydraulique 35 qui est relié lui-même à la goulotte 17, comme indiqué schématiquement sur la Fig. 2. Un conduit de retour 36 revient de la valve 30 au réservoir.

Ainsi, le déplacement à la main du levier 32 permet d'amener la valve 30 dans l'une ou l'autre de ses deux positions de travail, afin d'alimenter dans un sens ou dans l'autre le moteur hydraulique 35 pour assurer la commande manuelle de l'orientation de la goulotte 17.

On a représenté également de façon schématique sur la Fig. 2 l'émetteur 20, le récepteur 21, le réflecteur 22 prévu sur la remorque 19 et l'élément de commande 23 connecté à la fois à l'émetteur et au récepteur.

Cet élément de commande 23 est relié par des conducteurs 37, 38 à un relais 39 dont le noyau déplace le tiroir de la valve 31 dans un sens ou dans l'autre à partir de sa position médiane de fermeture. Un interrupteur à commande manuelle 40 est intercalé dans le conducteur 38. Cet interrupteur est fermé à la main par le conducteur quand celui-ci désire assurer la mise en service du système d'orientation automatique de la goulotte.

Il est prévu en outre, dans le conducteur 37, un interrupteur 41 qui est relié par une biellette 42 au levier 32 de telle sorte que cet interrupteur 41 ne soit fermé que lorsque le levier 32 se trouve dans sa position neutre, c'est-à-dire lorsque la valve 30 est fermée et que le système de commande manuelle de la goulotte est donc au repos. Cette disposition évite une commande simultanée de la goulotte par les deux systèmes conjugués.

La valve 31 est reliée par des conduits 43, 44 aux deux côtés du moteur hydraulique 35 et par un conduit de retour 45 au réservoir.

Lors de l'orientation automatique de la goulotte 17, l'élément de commande 23 agit après la fermeture des interrupteurs 40 et 41 pour alimenter le relais 39 dans un sens ou dans l'autre chaque fois que la goulotte doit être orientée, et en conséquence pour déplacer la valve 31 afin de l'amener dans l'une ou l'autre de ses deux positions de travail alimentant également dans un sens ou dans l'autre le moteur hydraulique 35 qui déplace la goulotte 17.

Ainsi, la position de la remorque 19 formant réceptacle par rapport à la moissonneuse-batteuse est détectée automatiquement et que l'orientation de la goulotte 17 est commandée en fonction de cette détection, de sorte que les conducteurs de la machine 16 et du tracteur 18 ont simplement besoin de surveiller la conduite de leur véhicule, sans se préoccuper de la position relative de la remorque 19 par rapport à la machine 16.

## Revendications

1. Dispositif de commande de la goulotte (17) pour récolteuse-hacheuse-chargeuse (16) automotrice ou attelée à un tracteur, se déplaçant dans un champ en étant accompagnée d'une remorque (19) ou autre véhicule indépendant formant réceptacle pour les produits récoltés et hachés, afin d'orienter la goulotte (17) de manière à projeter ces produits dans ce réceptacle, et faisant appel à un émetteur et un récepteur de type électrique ainsi qu'à des moyens (23) combinés à l'ensemble émetteur (20)-récepteur (21) pour interpréter les signaux reçus et pour actionner, en fonction du résultat de cette interprétation, les organes (35) d'orientation de la goulotte, caractérisé en ce qu'il est prévu un ensemble émetteur (20)-récepteur (21) de type radioélectrique, monté sur la récolteuse-hacheuse-chargeuse (16), et un réflecteur (22) ou analogue monté sur la remorque ou autre réceptacle (19) ou sur le véhicule associé.

2. Dispositif suivant la revendication 1, caractérisé en ce que l'ensemble émetteur (20)-récepteur (21) est combiné à la goulotte (17) et est orientable avec celle-ci.

3. Dispositif suivant la revendication 1 ou 2, caractérisé en ce que les moyens (23) comprennent un élément de commande recevant les signaux émis et les signaux reçus et relié à un relais (39) ou organe équivalent associé à une électro-valve (31) montée dans un circuit hydraulique (26, 29) entre une source de liquide (25) et un moteur hydraulique (35) ou analogue commandant l'orientation de la goulotte (17).

4. Dispositif suivant la revendication 3, caractérisé en ce que la valve (31) et le circuit hydraulique associé sont montés en parallèle avec un système hydraulique à commande manuelle (25, 30, 32, 35) d'orientation de la goulotte, des moyens (41, 42) étant prévus pour assurer la mise en service sélective du système de commande manuelle ou du système de commande d'orientation automatique de la goulotte.

5. Ensemble comprenant une récolteuse-hacheuse-chargeuse automotrice ou attelée à un tracteur et une remorque ou un véhicule analogue formant réceptacle, indépendant du précédent, caractérisé en ce qu'il est équipé d'un dispositif d'orientation de la goulotte suivant l'une quelconque des revendication précédentes, pour la projection des produits hachés dans la remorque ou le réceptacle analogues lors du travail.

## Patentansprüche

1. Vorrichtung zum Steuern der Auslaufschurre (17) für Ernte-Zerkleinerungs-Lademaschinen (16), die selbstfahrend oder an ein Zugfahrzeug angehängt sind und sich über ein Feld bewegen und dabei von einem Anhänger (19) oder einem anderen unabhängigen Fahrzeug begleitet werden, welches eine Aufnahme für die geernteten und zerkleinerten Produkte bildet, um die Auslaufschurre (17) in der Weise auszurichten, daß sie die Produkte in die Aufnahme wirft, und unter Verwendung eines Gebers und einem Empfängers vom elektrischen Typ sowie von Mitteln (23), welche mit der Anordnung von Geber (20) und Empfänger (21) kombiniert sind, um die empfangenen Signale zu interpretieren und um in Abhängigkeit von dem Ergebnis dieser Interpretation Orientierungsorgane (35) für die Auslaufschurre (17) zu betätigen, dadurch gekennzeichnet, daß eine Anordnung von Geber (20) und Empfänger (21) vom radioelektrischen Typ vorgesehen ist, welche auf der Ernte-Zerkleinerungs-Lademaschine (16) montiert ist, und ein Reflektor (22) oder eine analoge Einrichtung, der auf dem Anhänger oder der andersartigen Aufnahme (19) oder auf dem zugehörigen Fahrzeug montiert ist.

2. Vorrichtung nach Anspruch 1, dadurch gekennzeichnet, daß die Anordnung aus Geber (20) und Empfänger (21) mit der Auslaufschurre (17) kombiniert und mit dieser ausrichtbar ist.

3. Vorrichtung nach Anspruch 1 oder 2, dadurch gekennzeichnet, daß die Mittel (23) ein Steuerelement umfassen, welches die ausgesendeten Signale und die empfangenen Signale erhält und mit einem Relais (39) oder einem äquivalenten Organ verbunden ist, das einem Elektroventil (31) zugeordnet ist, welches in einem hydraulischen Kreis (26, 29) zwischen einer Flüssigkeitsquelle (25) und einem hydraulischen Motor (35) oder einer analogen Einrichtung montiert ist, welcher die Ausrichtung der Auslaufschurre (17) steuert.

4. Vorrichtung nach Anspruch 3, dadurch gekennzeichnet, daß das Ventil (31) und der zugeordnete hydraulische Kreis parallel zu einem hydraulischen Steuersystem montiert ist, welches zur manuellen Steuerung (25, 30, 32, 35) der Ausrichtung der Auslaufschurre dient, wobei Mittel (41, 42) vorgesehen sind, um die selektive Inbetriebnahme des manuellen Steuersystems oder des Steuersystems zur automatischen Ausrichtung der Auslaufschurre sicherzustellen.

5. Anordnung, umfassend eine Ernte-Zerkleinerungs-Lademaschine (16), welche selbstfahrend oder an ein Zugfahrzeug angehängt ist, und einen Anhänger oder ein analoges Fahrzeug, welches eine Aufnahme bildet und von dem vorangegangenen unabhängig ist, dadurch gekennzeichnet, daß sie mit einer Vorrichtung zum Ausrichten der Auslaufschurre gemäß irgend einem der voranstehenden Ansprüche ausgerüstet ist, um die zerkleinerten Produkte in den Anhänger oder die analoge Aufnahme während des Betriebes zu schleudern.

## Claims

1. Apparatus for controlling the spout (17) for a harvesting-chopping-loading machine (16) which is self-propelled or coupled to a tractor and which moves in a field accompanied by à trailer (19) or other independent vehicle forming a container for receiving the harvested and chopped products, in order to direct the spout (17) in such a way as to project said products into said receiving container, and using an emitter and a receiver of electrical type, as well as means (23) combined with the emitter (20)-receiver (21) assembly to interpret the signals received and to actuate the members (35) for directing the spout in dependence on the result of the interpretation operation, characterised in that there is provided an emitter (20)-receiver (21) assembly of radioelectric type, mounted on the harvesting-chopping-loading machine (16), and a reflector (22) or the like mounted on the trailer or other receiving container (19) or on the associated vehicle.

2. Apparatus according to claim 1 characterised in that the emitter (20)-receiver (21) assembly is combined with the spout (17) and is orientable therewith.

3. Apparatus according to claim 1 or claim 2 characterised in that the means (23) comprise a control element for receiving the emitted signals and the received signals and connected to a relay (39) or equivalent member associated with an electrically operated valve (31) disposed in a hydraulic circuit (26, 29) between a source of liquid (25) and a hydraulic motor (35) or the like for controlling the orientation of the spout (17).

4. Apparatus according to claim 3 characterised in that the valve (31) and the associated hydraulic circuit are disposed in parallel with a manually controllable hydraulic system (25, 30, 32, 35) for directing the spout, means (41, 42) being provided for selectively bringing into operation the manual control system or the system for automatically controlling the orientation of the spout.

5. An assembly comprising a harvesting-chopping-loading machine which is self-propelled or coupled to a tractor and a trailer or like vehicle forming a receiving container, which is independent of the former, characterised in that it is provided with an apparatus for directing the spout, according to any one of the preceding claims, for projecting the chopped products into the trailer or like receiving container in operation of the assembly.

FIG_1

FIG_2